# EUROPÄISCHE PATENTSCHRIFT

(11) **EP 2 989 652 B1**
(45) Veröffentlichungstag und Bekanntmachung des Hinweises auf die Patenterteilung: **10.01.2018**
(21) Anmeldenummer: 14718962.5
(22) Anmeldetag: 17.04.2014
(51) Int. Cl.: H01H 9/16, G08C 17/00, H04B 1/20, H02N 2/18, H05B 37/02

(54) **ENERGIEAUTARKES BEDIENELEMENT FÜR EIN STEUERBARES GERÄT**
SELF-POWERING CONTROL ELEMENT FOR A CONTROLLABLE APPARATUS
ELÉMENT DE COMMANDE AUTOALIMENTÉ POUR UN APPAREIL POUVANT ÊTRE COMMANDÉ

(30) Priorität: 25.04.2013 DE 202013101796 U
(43) Veröffentlichungstag der Anmeldung: 02.03.2016
(73) Patentinhaber: Zumtobel Lighting GmbH, 6850 Dornbirn (AT)
(72) Erfinder: ZEIDLER, Gerd, A-6912 Hörbranz (AT)
(74) Vertreter: Thun, Clemens
(86) Internationale Anmeldenummer: PCT/EP2014/057915
(87) Internationale Veröffentlichungsnummer: WO 2014/173817

(56) Entgegenhaltungen:
- EP-A1- 1 507 436
- EP-A1- 2 159 772
- EP-A1- 2 501 031
- EP-A2- 1 953 782
- US-A1- 2009 153 497
- US-A1- 2012 193 211
- US-B1- 6 294 906

## Beschreibung

Die vorliegende Erfindung betrifft ein energieautarkes Bedienelement für ein steuerbares Gerät gemäß dem Oberbegriff des Anspruchs 1. Das erfindungsgemäße Bedienelement kann insbesondere zur Beleuchtungssteuerung bzw. Lichtsteuerung eingesetzt werden oder auch zur Steuerung anderer Systeme wie z.B. einer Klimaanlage, Einrichtungen zur Belüftung, Heizung, Jalousien, Garagentoren oder dgl. verwendet werden.

Ausgangspunkt für die Erfindung sind Bediengeräte bzw. Bedienelemente z.B. zum Steuern von Leuchten, welche vollkommen autark arbeiten, was bedeutet, dass diese keine Verbindung zu einer externen Stromversorgungsquelle benötigen. Derartige Bedienelemente beruhen beispielsweise auf der Nutzung von magnetischen und/oder piezoelektrischen Generatoren, welche bei Betätigung des Bedienelements eine geringe Energiemenge erzeugen, die für den Betrieb des Bedienelements ausreichend ist. Ferner wird die Kommunikation zwischen dem Bedienelement und der Leuchte drahtlos betrieben, beispielsweise über Funk.

Ein Nachteil derartiger Bedienelemente besteht darin, dass diese zwar eine Leuchte ansteuern können, allerdings liefern die Bedienelemente keine Informationen über den Betriebszustand der Leuchte. Es könnte allenfalls über eine entsprechende Stellung eines üblichen Kippschalters, also auf mechanischem Wege erkannt werden, ob die Leuchte eingeschaltet ist oder nicht. Erweiterte Funktionen und Zustände einer Leuchte, beispielsweise eine eingestellte Stimmung bzw. ein bestimmtes Beleuchtungsszenario können auf diesem Wege allerdings nicht dargestellt werden. Vergleichbare Probleme existieren auch bei der Ansteuerung anderer Geräte mittels derartiger energieautarker Bedienelemente.

Derartige Bedienelemente bzw. Bediengeräte sind bspw. aus der EP 2 501 031 A1, der EP 2 159 772 A1 und der US 2009/0153497 A1 bekannt.

Aus der EP 1 507 436 A1 ist des Weiteren eine Fernbedienung bzw. ein Bediengerät zur Steuerung eines entsprechenden Geräts bekannt.

Der vorliegenden Erfindung liegt die Aufgabenstellung zugrunde, eine flexiblere Darstellung des Betriebszustandes eines anzusteuernden Geräts auf einem energieautarken Bedienelement zu ermöglichen.

Die Aufgabe wird gemäß der Erfindung mit dem in dem unabhängigen Anspruch angegebenen Gegenstand gelöst. Besondere Ausführungsformen und Weiterbildungen der Erfindung sind in den abhängigen Ansprüchen gegeben.

Gemäß der Erfindung ist ein Bedienelement für ein steuerbares Gerät vorgesehen, welches Kommunikationsmittel zur drahtlosen Übertragung von Steuerinformationen bzw. Steuerbefehlen an das Gerät aufweist. Vorzugsweise ist zusätzlich das Gerät dazu ausgebildet, mit dem Bedienelement zu kommunizieren. Zudem weist das Bedienelement mindestens eine Energiequelle auf - im Folgenden erste Energiequelle genannt -, die derart ausgestaltet ist, dass durch Bedienung bzw. Betätigung des Bedienelementes Energie für einen autarken Betrieb des Bedienelementes erzeugt wird. Ferner weist das Bedienelement erfindungsgemäß ein Display auf, welches eine Darstellung des Betriebszustandes des anzusteuernden Geräts ermöglicht. Zusätzlich ist vorgesehen, dass das Bedienelement dazu ausgelegt ist, automatisch eine Statusabfrage an das anzusteuernde Gerät zu senden. Ferner ist dieses in der Lage, Rückmeldungen von dem Gerät zu empfangen und anschließend die Darstellung des Displays entsprechend den in der Rückmeldung enthaltenen Informationen zu aktualisieren.

Bei dem anzusteuernden Gerät kann es sich bspw., wie bereits erwähnt, um eine Leuchte bzw. eine Beleuchtungseinrichtung oder auch um eine Klimaanlage, Einrichtungen zur Belüftung, Heizung, Jalousien, Garagentoren oder dgl. handeln.

Vorzugsweise ist die erste Energiequelle als ein magnetisch-induktiver und/oder piezoelektrischer Generator ausgebildet. Für spezielle Anwendungszwecke kommen auch sog. triboelektrische Elemente zum Einsatz. Damit lässt sich das Bedienelement derart einrichten, dass eine Bedienung dessen zu einer Energieproduktion für das Bedienelement führt.

Gemäß einem weiteren Aspekt der Erfindung ist das Display als sog. E-Paper-Display ausgebildet, welches dazu ausgelegt ist, im Wesentlichen nur dann Energie zu verbrauchen, wenn die Darstellung des Displays geändert wird. Auf diese Weise kann für lange Zeiträume die Displaydarstellung erhalten werden bei sehr geringem Energieverbrauch. Vorzugsweise weist hierbei das Display mindestens eine Indikatoranzeige auf. E-Paper-Displays sind zum derzeitigen Entwicklungsstand üblicherweise monochrom, d.h. diese sind nur zweifarbig in der Darstellung - beispielsweise Schwarz/Weiß - und sind deshalb insbesondere als Indikatoren geeignet.

Das Display kann ferner dazu ausgelegt sein, bei einem Betätigen des Bedienelementes Informationen über einen Betätigungsvorgang anzuzeigen, insbesondere sollen Informationen über einen an das Gerät abgegebenen Steuerbefehl angezeigt werden. Somit wird einem Benutzer angezeigt, ob und - falls ja - welcher Befehl zuletzt abgegeben wurde. Die für den Steuerbefehl sowie die Darstellung der entsprechenden Information benötigte Energie wird dabei durch das Bedienen des Bedienelementes automatisch von der ersten Energiequelle erzeugt.

In einer besonderen Ausführung führt dies also beispielsweise dazu, dass bei einem Anschaltbefehl - z.B. an eine Leuchte - ein EIN-AUS-Indikator weiß aufleuchtet bzw. die entsprechende Information auf dem Display dargestellt wird, wobei allerdings nur der Befehl abgegeben wurde und wobei vom Bedienelement her zunächst nicht ersichtlich ist, ob das Gerät tatsächlich diesen den Befehl ausgeführt hat. Dieser Nachteil wird dann mit der zuvor erwähnten automatischen Statusabfrage und außerdem den nachfolgend beschriebenen besonders bevorzugten Weiterbildungen erfindungsgemäß gelöst.

Gemäß einem weiteren Aspekt der Erfindung kann vorgesehen sein, dass die Zeitpunkte der automatischen Statusabfragen vorzugsweise vorprogrammiert sind. Es könnten beispielsweise in regelmäßigen oder auch unregelmäßigen Abständen Statusabfragen gesendet werden. Vorzugsweise sind auch mit Hilfe manueller Betätigung zusätzliche Statusabfragen über den Betriebszustand des anzusteuernden Geräts möglich.

Um automatische Statusabfragen senden zu können, benötigt das Bedienelement Energie, die üblicherweise nicht durch manuelles Bedienen erbracht wird. Daher ist gemäß einem weiteren Aspekt der Erfindung mindestens eine weitere Energiequelle - im Folgenden zweite Energiequelle genannt - an oder in dem Bedienelement angeordnet, die einen autarken Betrieb des Bedienelementes entscheidend unterstützt. Vorzugsweise ist diese Energiequelle dazu ausgelegt, Energie für die automatischen Statusabfragen bereitzustellen. Bei der zweiten Energiequelle kann es sich dabei um eine Langzeitbatterie, einen Akkumulator, ein Solarzellen-Modul und/oder einen thermischen Energiegenerator handeln. Im Falle eines Solarzellen-Moduls oder eines thermischen Generators muss die Energie zumindest kurzzeitig in einem Energiezwischenspeicher zwischengespeichert bzw. gesammelt werden. Es bietet sich dafür vorzugsweise ein Kondensator an.

Die zweite Energiequelle muss zusätzlich dazu ausgelegt sein, Energie für die Änderung der Displaydarstellung bereitzustellen, da eine Rückmeldung von dem anzusteuernden Gerät eventuell eine Änderung der Darstellung erfordert. Dies bedeutet, dass frühestens erst dann eine Statusabfrage sinnvoll ist, wenn genug Energie für die Abfrage und die Darstellungsänderung vorhanden ist. Dies ist bei der Programmierung hinsichtlich der automatischen Statusabfragen zu beachten. Ferner ist die Programmierung vorzugsweise derart gewählt, dass eine automatische Statusabfrage im Wesentlichen genau dann erfolgt, wenn genügend Energie für Statusabfrage und Darstellungsänderung gesammelt wurde.

Mit Hilfe der zweiten Energiequelle kann vor allem erzielt werden, dass alle mit dem anzusteuernden Gerät verknüpften Bedienelemente automatisch und ohne manuelle Einflussnahme früher oder später den korrekten Betriebszustand des Geräts auf dem Display anzeigen. Dies ist insbesondere dann vorteilhaft, wenn das Gerät automatisch angesteuert wird - beispielsweise über Sensoren oder dergleichen - oder mehrere getrennte Bedienelemente zum Ansteuern des Geräts zur Verfügung stehen.

Gemäß einem weiteren Aspekt der Erfindung sind Mittel zum Bedienen des Bedienelements als Tasten ausgebildet. Vorzugsweise sind den Tasten E-Paper-Displays zugeordnet, die neben den Tasten angeordnet sind und deren Betätigungszustand anzeigen.

Vorzugsweise sind weitere Mittel zum Bedienen als ein oder mehrere Touchscreens ausgebildet, auf denen Symbole/Icons und/oder Bedienobjekte dargestellt sind. Dies erleichtert die intuitive Bedienung für einen Benutzer. Ferner können beispielsweise alle Tasten durch Touchscreens ersetzt werden, um Platz auf dem Bedienelement zu sparen, da Tasten und Displays praktisch aufeinander und nicht nebeneinander angeordnet sind.

Gemäß einem letzten Aspekt der Erfindung weist das Bedienelement einen Rahmen auf, der als Lichtleiter ausgebildet ist. Der Lichtleiter ist dazu ausgelegt, auf den Lichtleiter treffendes Licht als Hintergrundbeleuchtung für das Display einzusetzen. Dabei ist das Display vorzugsweise transflektiv ausgebildet. Auf diese Weise kann ein Benutzer die Darstellung des Displays erkennen, selbst wenn dieses einer schwachen externen Beleuchtung ausgesetzt ist.

Die Erfindung wird im Folgenden anhand von mehreren Ausführungsbeispielen und mit Bezug auf die Zeichnungen näher erläutert. Es zeigen:
- Fig. 1: eine Schaltskizze eines Lichtabgabesystems aufweisend eine Leuchte und ein erfindungsgemäßes Bedienelement;
- Fig. 2: eine Frontskizze einer möglichen ersten äußeren Bauform eines erfindungsgemäßen Bedienelementes;
- Fig. 3: eine Frontskizze einer möglichen zweiten äußeren Bauform eines erfindungsgemäßen Bedienelementes und
- Fig. 4: eine Frontskizze einer möglichen dritten äußeren Bauform eines erfindungsgemäßen Bedienelementes.

Das erfindungsgemäße Bedienelement wird nachfolgend anhand des Beispiels der Beleuchtungs- bzw. Lichtsteuerung erläutert. Wie allerdings bereits erwähnt ist die Erfindung nicht auf die Ansteuerung von Leuchten beschränkt sondern kann bei unterschiedlichsten steuerbaren Geräten zum Einsatz kommen, wobei insbesondere Klimaanlagen, Einrichtungen zur Belüftung und/oder Heizung, Jalousien, Garagentore oder dgl. zu erwähnen wären.

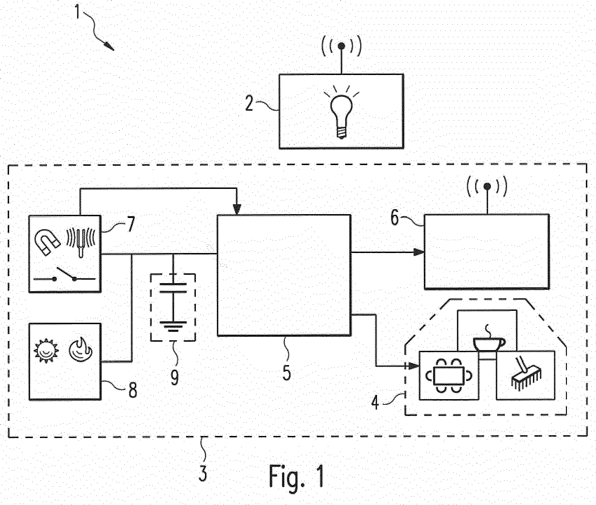

Fig. 1 zeigt eine Schaltskizze eines Lichtabgabesystems 1 aufweisend eine Leuchte 2 und ein erfindungsgemäßes Bedienelement 3. Das Bedienelement 3 weist unter anderem eine Funkeinheit 6 auf - wie beispielsweise ein Radiotransceiver 6 -, die dazu ausgelegt ist, drahtlos mit der Leuchte 2 zu kommunizieren. Die Leuchte 2 wird vorzugsweise über eine nicht dargestellte Netzspannungsquelle betrieben. Ebenfalls nicht dargestellt ist eine Verbindung der Leuchte 2 zu einem Feldbus bzw. Lichtmanagement-Bus, mit dem eine systemexterne Ansteuerung der Leuchte 2 ermöglicht wird.

Das Bedienelement 3 weist ferner eine Steuereinheit 5, mindestens ein E-Paper-Display 4, eine erste Energiequelle 7 und eine zweite Energiequelle 8 auf. Ein Energiezwischenspeicher 9 ist der zweiten Energiequelle 8 zugeordnet, falls diese selber keine Energie speichern kann. Der Energiezwischenspeicher 9 ist vorzugsweise als Kondensator 9 ausgebildet ist.

Die Mittel zum Bedienen des Bedienelementes 3 sind in Fig. 1 nicht direkt dargestellt. Diese können sich nach einem Aspekt der Erfindung auf dem Display 4 selbst befinden, welches dann als Touchscreen ausgebildet ist, das Bedienobjekte wie Symbole und/oder Icons aufweist, mit deren Hilfe ein Benutzer die Leuchte 2 ansteuern kann. In ebenfalls erdenklicher Weise können die Mittel zum Bedienen als übliche Tasten ausgebildet.

Die bevorzugte Ausbildung des Displays 4 als E-Paper-Display 4 ist deshalb vorteilhaft, da dieses im Wesentlichen nur bei einer Änderung der Displaydarstellung Energie verbraucht. Somit kann dieses mit sehr geringem Energieaufwand betrieben werden.

Durch eine manuelle Betätigung des Bedienelementes 3 wird in der ersten Energiequelle 7, welche vorzugsweise als magnetisch-induktiver und/oder piezoelektrischer Generator 7 ausgestaltet ist, eine elektrische Energie erzeugt. Die Steuereinheit 5 registriert den mit der Betätigung assoziierten Steuerbefehl und leitet bzw. übersetzt diesen an die Funkeinheit 6. Die Funkeinheit 6 schickt den Steuerbefehl dann über Funk an die Leuchte 2, worauf die Leuchte 2 gegebenenfalls ihren Betriebszustand ändert. Ferner ist in einer einfachen Ausführungsform die Steuereinheit 5 dazu ausgelegt, anschließend die Anzeige/Darstellung des E-Paper-Displays 4 gemäß dem mit der Betätigung assoziierten Steuerbefehl zu ändern, unabhängig davon, was die Leuchte 2 macht.

Der Generator 7 ist derart ausgestaltet, dass die durch die Betätigung erzeugte Energie mindestens ausreicht, um den oben beschriebenen Prozess mit Energie zu versorgen. Es ist ferner erdenklich, dass die Steuereinheit 5 derart ausgelegt ist, gegebenenfalls überschüssige Energie dem Energiezwischenspeicher 9 zuzuführen.

Die zweite - optionale - Energiequelle 8 ist vorzugsweise als thermischer Energiegenerator 8 und/oder als Solarzellen-Modul 8 ausgebildet. Diese sind dazu ausgelegt, im Laufe der Zeit Energie für den Energiezwischenspeicher 9 zu sammeln. Die zweite Energiequelle 8 könnte auch als eine Langzeitbatterie 8 bzw. ein Akkumulator 8 ausgebildet sein, welche bzw. welcher für einen jahrelangen Betrieb ausgelegt ist. Es sollte zumindest erreicht werden, dass kein größerer Wartungsumstand in Verbindung mit dem Bedienelement 3 entsteht, beispielsweise durch das Wechseln einer Batterie.

In einer Ausführungsmöglichkeit überprüft die Steuereinheit 5 in vorzugsweise regelmäßigen Zeitabständen automatisch, ob genügend Energie in dem Energiezwischenspeicher 9 vorhanden ist, die benötigt wird, um eine Statusabfrage über die Funkeinheit 6 an die Leuchte 2 zu schicken und bei einer Rückmeldung der Leuchte 2 gegebenenfalls die Displaydarstellung zu ändern. Wenn dies der Fall ist, führt die Steuereinheit 5 den Statusabfrageprozess aus.

Es ist in einer alternativen Ausführungsmöglichkeit denkbar, dass der als Kondensator 9 ausgebildete Energiezwischenspeicher 9 durch ein Überschreiten einer Schwellenspannung die Steuereinheit 5 automatisch dazu veranlasst, eine Statusabfrage über die Funkeinheit 6 zu senden. Dabei sollte die Schwellenspannung sinngemäß so gewählt sein, dass diese der oben genannten Mindestenergie entspricht. Auf diese Weise wird die Statusabfragefrequenz maximiert.

Die Steuereinheit 5 und die Funkeinheit 6 sind derart ausgestaltet, dass diese möglichst energiearm betrieben werden können. Je weniger Energie pro automatischer Statusabfrage benötigt wird, desto mehr Statusabfragen pro Zeit können durchgeführt werden. Als energiearme Funktechnik kommen beispielsweise Bluetooth Low Energy oder Funktechnik im 868-MHz-Band in Betracht.

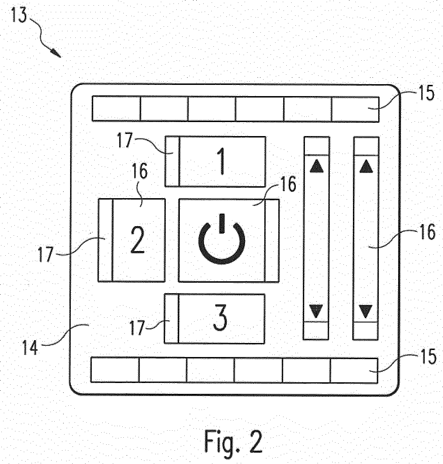

Fig. 2 zeigt eine Frontskizze einer möglichen ersten äußeren Bauform eines erfindungsgemäßen Bedienelementes 13. Dieses weist ein vorzugsweise flaches Gehäuse 14 mit einem rechteckigen Rahmen auf. Die Form des Gehäuses ist allerdings nicht auf diese Form beschränkt. Am oberen und unteren Teil des Gehäuses 14 sind Solarzellen 15 in Form von horizontalen Streifen angeordnet. Die Solarzellen 15 bilden hierbei die zweite Energiequelle. Im zentralen Bereich des Gehäuses 14 zwischen den Solarzellen 15 sind rechteckige Tasten 16 angeordnet, die vorzugsweise jeweils mit einer nicht dargestellten ersten Energiequelle verknüpft sind. Jeder Taste 16 ist jeweils ein energieeffizientes E-Paper-Display 17 zugeordnet, welches jeweils als Indikatoranzeige 17 ausgebildet ist.

Die elektrische Verschaltung des Bedienelementes 13 und restliche betriebsnotwendige Komponenten sind aus Fig. 1 entsprechen zu entnehmen. Ferner ist die interne Funktionsweise des Bedienelementes 13 aus der bisherigen Beschreibung insbesondere für Fig. 1 zu entnehmen.

Die Indikatoranzeigen 17 sind derart ausgelegt, dass diese vor allem auf eine Betätigung der jeweils zugeordneten Taste 16 reagieren und gegebenenfalls ihre Darstellung umschalten. Die dafür benötigte Energie wird durch das Drücken der Tasten über die erste Energiequelle erzeugt. Die Farben der Anzeigen sind nicht auf Schwarz-Weiß beschränkt. Jede andere duale Farbkombination ist möglich wie beispielsweise Rot-Weiß oder Grün-Weiß. Darüber hinaus werden zukünftig sind auch mehrfarbige Displays verfügbar sein, welche einen ähnlich geringen Energieverbrauch aufweisen wie die heute üblichen E-Paper Displays. Eine Beschriftung über die Funktionsweise einer Taste 16 ist vorzugsweise auf der Taste 16 selbst abgebildet.

Das Bedienelement 13 wird vorzugsweise an einer Wand angeordnet wie ein üblicher Lichtschalter. Das Bedienelement 13 besitzt allerdings den Vorteil, dass es energieautark arbeiten kann und somit keine externe Verkabelung benötigt. Auf diese Weise ist eine Montage des Bedienelementes 13 an einer Wand verhältnismäßig einfach m Vergleich zu einem üblichen Lichtschalter. Z.B. wäre das einfache Aufkleben des Bedienelements 13 - auch auf einer Glasscheibe oder dgl. - denkbar. Ebenfalls erdenklich ist eine mobile Auslegung des Bedienelementes 13. Ferner kann dieses eine Vielzahl an Betriebszuständen einer Leuchte anzeigen.

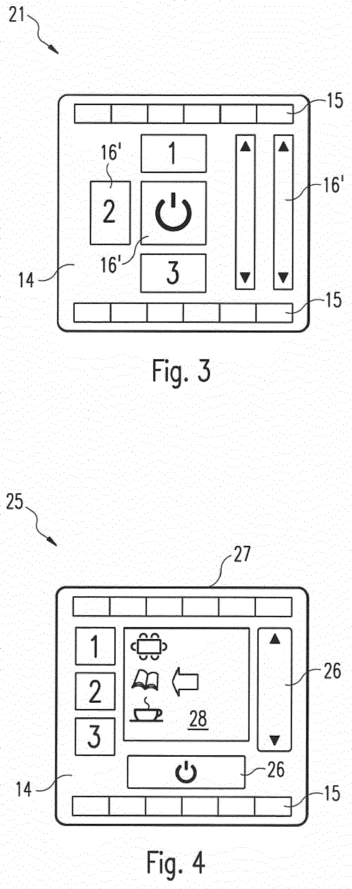

Fig. 3 zeigt eine Frontskizze einer möglichen zweiten äußeren Bauform eines erfindungsgemäßen Bedienelementes 21. Dieses ist dem Bedienelement 13 aus Fig. 2 ähnlich aufgebaut und weist im Wesentlichen nur einen Unterschied auf. Die mit dem Bezugszeichen 16' markierten Bedienoberflächen 16' bestehen hier jeweils aus einem E-Paper-Display und einer Tasteroberfläche bzw. Betätigungsfläche. Ansonsten weist dieses Bedienelement 21 ebenfalls ein Gehäuse 14 und Solarzellen 15 auf.

Die Bedienoberfläche 16' kann beispielsweise derart ausgestaltet sein, dass diese auf Druck oder durch alleiniges Berühren oder Überstreichen aktiviert werden. Dafür könnten beispielsweise triboelektrische Elemente als Energiegeneratoren zum Einsatz kommen, die eine sehr effiziente Umwandlung von mechanischer in elektrische Energie ermöglichen.

Der Vorteil des Bedienelementes 21 gegenüber dem Bedienelement 13 liegt darin, dass die Betätigungsfläche, die bei dem vorangegangen Ausführungsbeispiel eine Taste 16 war, mit dem E-Paper-Display eine gemeinsame Fläche bildet, so dass die Betätigungsfläche effektiv einen Touchscreen 16' bildet. Aufgrund dessen kann die Oberfläche des Bedienelementes 21 effizienter genutzt werden. Beispielsweise sind größere Tasteroberflächen möglich bei gleicher Größe des Bedienelementes 21.

Die Touchscreens 16' sind vorzugsweise als Indikatoranzeigen ausgebildet und weisen Symbole/Icons auf, die dem Benutzer eine Zuordnung des Touchscreens 16' mit einem entsprechenden Steuerbefehl erlaubt.

In Fig. 4 schließlich ist ein erfindungsgemäßes Bedienelement 25 nach einer dritten möglichen äußeren Bauform gezeigt. Dieses weist analog zu den vorherigen Bauformen ein Gehäuse 14 und Solarzellen 15 auf. Im Gegensatz zu den vorherigen Bauformen weist dieses ein einziges großes E-Paper-Display 28 zentral angeordnet auf, welches vorzugsweise nicht als Touchscreen ausgebildet ist. Um das Display 28 herum sind übliche Tasten 26 mit Symbolen und zum Bedienen angeordnet. Der Rahmen 27 ist als ein Lichtleiter 27 ausgebildet.

Der Lichtleiter 27 ist dazu ausgelegt, auf den Rahmen treffendes externes Licht zum Display 28 zu leiten um dieses als Hintergrundbeleuchtung zu verwenden. Das Display 28 ist zu diesem Zweck transflektiv ausgelegt.

Mit der Hintergrundbeleuchtung des Displays 28 ist es zudem möglich, das Bedienelement 25 an dunklen Orten einwandfrei zu bedienen, da die Darstellung des Displays 28 für einen Benutzer immer noch ausreichend hell wahrzunehmen ist.

Die Größe des Displays 28 birgt vor allem den Vorteil, dass zusätzliche, insbesondere komplexe grafische Darstellungen möglich sind, welche die Möglichkeiten einer Indikatoranzeige übertreffen. Mit deren Hilfe ist die Darstellung aller erdenklichen Betriebszustände einer Leuchte auf einem Display 28 möglich.

Die Bauform aus Fig. 3 ist technisch am einfachsten zu realisieren, da diese nur ein Display 28 aufweist. Es sind ferner weitere Bauformen erdenklich, die aus einer sinngemäßen Kombination der oben beschriebenen Bauformen besteht.

Zusammenfassend besteht also durch die vorliegende Erfindung die Möglichkeit, energieeffiziente und energieautarke Bedienelemente zum Ansteuern von Leuchten oder anderen steuerbaren Geräten zu bauen. Mit Hilfe eines eingebauten energieeffizienten E-Paper-Displays lassen sich verschiedene Betriebszustände des steuerbaren Geräts graphisch und benutzerfreundlich darstellen. Die energieautarke Ausgestaltung bietet zudem erhöhte Flexibilität insbesondere bei einer Montage des Bedienelementes an einer Wand oder einer sonstigen Oberfläche.

## Patentansprüche

1. Bedienelement (3, 13, 21, 25) für ein steuerbares Gerät (2),
mit Kommunikationsmitteln (6) zur drahtlosen Übertragung von Steuerinformationen an das Gerät (2) sowie mindestens einer Energiequelle (7), die derart ausgestaltet ist, dass durch Bedienung bzw. Betätigung des Bedienelementes Energie für einen autarken Betrieb des Bedienelementes produziert wird,
**dadurch gekennzeichnet,**
**dass** das Bedienelement mindestens ein Display (4, 17, 16', 28) zur Darstellung eines Betriebszustands des steuerbaren Geräts (2) aufweist und
**dass** das Bedienelement dazu ausgebildet ist, automatisch eine Statusabfrage an das steuerbare Gerät (2) zu senden, ferner eine Rückmeldung von dem Gerät (2) auf die Statusabfrage zu empfangen und anschließend die Darstellung des Displays (4, 17, 16', 28) entsprechend der Rückmeldung zu aktualisieren.

2. Bedienelement nach Anspruch 1,
**dadurch gekennzeichnet,**
**dass** es sich bei dem steuerbaren Gerät um eine Leuchte, eine Klimaanlage, Einrichtungen zur Belüftung oder Heizung, Jalousien oder Garagentore handelt.

3. Bedienelement nach Anspruch 1 oder 2,
**dadurch gekennzeichnet,**
**dass** die Energiequelle (7) ein magnetisch-induktiver und/oder piezoelektrischer Generator ist.

4. Bedienelement nach einem der vorherigen Ansprüche,
**dadurch gekennzeichnet,**
**dass** das Display (4, 17, 16', 28) ein E-Paper-Display ist, welches dazu ausgelegt ist, nur bei einer Änderung einer Displaydarstellung Energie zu verbrauchen.

5. Bedienelement nach einem der vorherigen Ansprüche,
**dadurch gekennzeichnet,**
**dass** das Display (4, 17, 16', 28) mindestens eine Indikatoranzeige aufweist.

6. Bedienelement nach einem der vorherigen Ansprüche,
**dadurch gekennzeichnet,**
**dass** das Display (4, 17, 16', 28) dazu ausgelegt ist, bei einem Betätigen des Bedienelements Informationen über einen Betätigungsvorgang auf dem Display (4, 17, 16', 28) anzuzeigen.

7. Bedienelement nach einem der vorherigen Ansprüche,
**dadurch gekennzeichnet,**
**dass** das Bedienelement mindestens eine weitere Energiequelle (8) aufweist, die dazu ausgelegt ist, Energie für den autarken Betrieb des Bedienelements zu produzieren.

8. Bedienelement nach Anspruch 7,
**dadurch gekennzeichnet,**
**dass** die weitere Energiequelle (8) eine Batterie, ein Akkumulator, ein Solarzellen-Modul (15) und/oder ein thermischer Energiegenerator ist.

9. Bedienelement nach Anspruch 8,
**dadurch gekennzeichnet,**
**dass** dem Solarzellen-Modul (15) und/oder dem thermischen Energiegenerator ein Energiezwischenspeicher (9) zugeordnet ist.

10. Bedienelement nach einem der Ansprüche 7 bis 9,
**dadurch gekennzeichnet,**
**dass** mindestens eine der Energiequellen (7, 8) dazu ausgelegt ist, Energie für die automatischen Statusabfragen bereitzustellen.

11. Bedienelement nach einem der Ansprüche 7 bis 10,
**dadurch gekennzeichnet,**
**dass** mindestens eine der Energiequellen (7, 8) dazu ausgelegt ist, Energie für die Änderung der Displaydarstellung bereitzustellen.

12. Bedienelement nach einem der vorherigen Ansprüche,
**dadurch gekennzeichnet,**
**dass** Mittel zum Bedienen (16, 16', 26) als Tasten (16, 26) ausgebildet sind.

13. Bedienelement nach einem der vorherigen Ansprüche,
**dadurch gekennzeichnet,**
**dass** Mittel zum Bedienen (16, 16', 26) als mindestens ein Touchscreen (16') ausgebildet sind, auf dem Bedienobjekte dargestellt sind.

14. Bedienelement nach einem der vorherigen Ansprüche,
**dadurch gekennzeichnet,**
**dass** das Bedienelement einen Rahmen (27) aufweist, der als Lichtleiter (27) ausgebildet ist.

15. Bedienelement nach Anspruch 14,
**dadurch gekennzeichnet,**
**dass** der Lichtleiter (27) dazu ausgelegt ist, auf den Lichtleiter (27) treffendes Licht als Hintergrundbeleuchtung für das Display (28) zu verwenden.

## Claims

1. A control element (3, 13, 21, 25) for a controllable device (2), having communication means (6) for wireless transmission of control information to the device (2) and at least one energy source (7), which is designed such that, by operating or actuating the control element, energy is produced for an autonomous operation of the control element,
**characterized in**
**that** the control element has at least one display (4, 17, 16', 28) for depicting an operating status of the controllable device (2) and that the control element is designed to automatically send a status request to the controllable device (2), also to receive a feedback signal from the device (2) to the status request and subsequently to update the depiction of the display (4, 17, 16', 28) corresponding to the feedback signal.

2. A control element according to Claim 1,
**characterized in**
**that** the controllable device is a lamp, a climate control unit, equipment for air ventilation or heating, blinds or garage doors.

3. A control element according to Claim 1 or 2,
**characterized in**
**that** the energy source (7) is a magnetic-inductive and/or piezoelectric generator.

4. A control element according to any one of the preceding claims,
**characterized in**
**that** the display (4, 17, 16', 28) is an e-paper display, which is designed to consume energy only during a change of the display depiction.

5. A control element according to any one of the preceding claims,
**characterized in**
**that** the display (4, 17, 16', 28) has at least one indicator display.

6. A control element according to any one of the preceding claims,
**characterized in**
**that** the display (4, 17, 16', 28) is designed to indicate information about an actuating process on the display (4, 17, 16', 28) during an actuation of the control element.

7. A control element according to any one of the preceding claims,
**characterized in**
**that** the control element has at least one further energy source (8), which is designed, to produce energy for the autonomous operation of the control element.

8. A control element according to Claim 7,
**characterized in**
**that** the further energy source (8) is a battery, an accumulator, a solar cell module (15) and/or a thermal energy generator.

9. A control element according to Claim 8,
**characterized in**
**that** an intermediate energy store (9) is assigned to the solar cell module (15) and/or to the thermal energy generator.

10. A control element according to any one of Claims 7 to 9,
**characterized in**
**that** at least one of the energy sources (7, 8) is designed to provide energy for the automatic status requests.

11. A control element according to any one of Claims 7 to 10,
**characterized in**
**that** at least one of the energy sources (7, 8) is designed to provide energy for the change of the display depiction.

12. A control element according to any one of the preceding claims,
**characterized in**
**that** means for the operation (16, 16', 26) are designed as keys (16, 26).

13. A control element according to any one of the preceding claims,
**characterized in**
**that** means for the operation (16, 16', 26) are designed as at least a touch screen (16'), on which the control objects are depicted.

14. A control element according to any one of the preceding claims,
**characterized in**
**that** the control element has a frame (27), which is designed as a light guide (27).

15. A control element according to Claim 14,
**characterized in**
**that** the light guide (27) is designed to use light striking the light guide (27) as background lighting for the display (28).

## Revendications

1. Elément de commande (3, 13, 21, 25) pour un appareil (2) pouvant être commandé, avec des moyens de communication (6) destinés à la transmission sans fil d'informations de commande à l'appareil (2) ainsi qu'avec au moins une source d'énergie (7) qui est constituée de telle sorte que de l'énergie pour un fonctionnement en mode autonome de l'élément de commande est produite par la commande ou respectivement par l'actionnement de l'élément de commande,
**caractérisé en ce que**
l'élément de commande présente au moins un écran (4, 17, 16', 28) destiné à la représentation d'un état de fonctionnement de l'appareil (2) pouvant être commandé, et **en ce que** l'élément de commande est constitué pour envoyer automatiquement une interrogation de statut à l'appareil (2) pouvant être commandé, pour recevoir ensuite une réponse de l'appareil (2) à l'interrogation de statut et puis pour actualiser la représentation de l'écran (4, 17, 16', 28) en fonction de la réponse.

2. Elément de commande selon la revendication 1,
**caractérisé en ce que**
concernant l'appareil pouvant être commandé, il s'agit d'un luminaire, d'un système de climatisation, d'équipements de ventilation ou de chauffages, de stores ou de portes de garage.

3. Elément de commande selon la revendication 1 ou 2,
**caractérisé en ce que**
la source d'énergie (7) est un générateur magnéto-inductif et/ou piézoélectrique.

4. Elément de commande selon l'une des revendications précédentes,
**caractérisé en ce que**
l'écran (4, 17, 16', 28) est un écran papier électronique qui est conçu pour ne consommer de l'énergie que lors d'une modification d'une représentation d'écran.

5. Elément de commande selon l'une des revendications précédentes,
**caractérisé en ce que**
l'écran (4, 17, 16', 28) présente au moins un affichage indicateur.

6. Elément de commande selon l'une des revendications précédentes,
**caractérisé en ce que**
l'écran (4, 17, 16', 28) est conçu pour, lors d'un actionnement de l'élément de commande, afficher sur l'écran (4, 17, 16', 28) des informations concernant un processus d'actionnement.

7. Elément de commande selon l'une des revendications précédentes,
**caractérisé en ce que**
l'élément de commande présente au moins une autre source d'énergie (8) qui est conçue pour produire de l'énergie pour le fonctionnement en mode autonome de l'élément de commande.

8. Elément de commande selon la revendication 7,
**caractérisé en ce que**
l'autre source d'énergie (8) est une batterie, un accumulateur, un module de panneau solaire (15) et/ou un générateur d'énergie thermique.

9. Elément de commande selon la revendication 8,
**caractérisé en ce**
**qu'**un accumulateur intermédiaire d'énergie (9) est affecté au module de panneau solaire (15) et/ou au générateur d'énergie thermique.

10. Elément de commande selon l'une des revendications 7 à 9,
**caractérisé en ce**
**qu'**au moins une des sources d'énergie (7, 8) est conçue pour fournir de l'énergie pour les interrogations de statut automatiques.

11. Elément de commande selon l'une des revendications 7 à 10,
**caractérisé en ce**
**qu'**au moins une des sources d'énergie (7, 8) est conçue pour fournir de l'énergie pour la modification de la représentation d'écran.

12. Elément de commande selon l'une des revendications précédentes,
**caractérisé en ce que**
des moyens destinés à la commande (16, 16', 26) sont constitués en tant que touches (16, 26).

13. Elément de commande selon l'une des revendications précédentes,
**caractérisé en ce que**
des moyens destinés à la commande (16, 16', 26) sont constitués en tant qu'au moins un écran tactile (16') sur lequel sont représentés des objets de commande.

14. Elément de commande selon l'une des revendications précédentes,
**caractérisé en ce que**
l'élément de commande présente un cadre (27) qui est constitué en tant que guide de lumière (27).

15. Elément de commande selon la revendication 14,
**caractérisé en ce que**
le guide de lumière (27) est conçu pour utiliser la lumière rencontrant le guide de lumière (27) en tant que rétroéclairage pour l'écran (28).
